(19) Europäisches Patentamt

European Patent Office

Office européen des brevets

(11) Veröffentlichungsnummer: **0 267 505 B1**

(12) **EUROPÄISCHE PATENTSCHRIFT**

(45) Veröffentlichungstag der Patentschrift: **01.07.92**

(51) Int. Cl.⁵: **B23Q 7/00**, B21D 43/13, F16H 25/14

(21) Anmeldenummer: **87116032.1**

(22) Anmeldetag: **31.10.87**

(54) **Maschine zum Bewegen von Werkstücken und dergleichen.**

(30) Priorität: **13.11.86 DE 8630404 U**

(43) Veröffentlichungstag der Anmeldung:
**18.05.88 Patentblatt 88/20**

(45) Bekanntmachung des Hinweises auf die
Patenterteilung:
**01.07.92 Patentblatt 92/27**

(84) Benannte Vertragsstaaten:
**DE ES FR GB IT**

(56) Entgegenhaltungen:
**CH-A- 270 635**
**DE-A- 2 537 999**
**DE-C- 3 400 332**
**US-A- 2 970 485**

(73) Patentinhaber: **Heinrichs, Peter Ekkehard**
**Weinbergstrasse 18**
**W-6501 Sörgenloch(DE)**

(72) Erfinder: **Heinrichs, Peter Ekkehard**
**Weinbergstrasse 18**
**W-6501 Sörgenloch(DE)**

(74) Vertreter: **Blumbach Weser Bergen Kramer**
**Zwirner Hoffmann Patentanwälte**
**Sonnenberger Strasse 100**
**W-6200 Wiesbaden 1(DE)**

Rank Xerox (UK) Business Services

## Beschreibung

Die Erfindung betrifft eine Maschine zum taktmäßigen und reziproken Bewegen von Werkstücken u. dgl. nach dem Oberbegriff des Anspruchs 1. Eine solche Maschine ist aus der CH-A-270 635 bekannt.

Für Zwischenstationen in Transferstraßen, beispielsweise bei der Fertigung von Kraftfahrzeugen, werden Hebeeinrichtungen benötigt, die Werkstücke in zwei Schritten anheben können. Dazu setzt man in bekannter Weise mit Druckluft- oder Hydraulikzylindern betriebene Einrichtungen ein, bei denen ein geführter Schlitten mit Hilfe von zwei nacheinander zur Wirkung kommenden Zylindern verschoben wird. Der Energieaufwand bei Verwendung von Druckluft- oder Hydraulikzylindern ist jedoch hoch und außerdem stört die Lärmentwicklung. Darüber hinaus ist in vielen Fällen das abrupte Anfahren und Abbremsen störend. Ähnliche Probleme treten bei bekannten Maschinen auf, die Werkstücke oder andere Teile horizontal oder geneigt bewegen, beispielsweise Blechteile in Pressen oder Stanzen einlegen. Bei der bekannten Maschine nach der genannten CH-A-270 635 handelt es sich um eine Hebebühne, die über vier synchronisierte Kurbeln in einem Schritt angehoben bzw. abgesenkt werden kann. Die Kurbeln greifen dabei mit Rollen in durchlaufende Nuten zwischen Führungsschienen ein, und zwar jeweils zwei Rollen auf beiden Seiten der Hebebühne. Beim Anheben bzw. Absenken verlassen die Rollen ihre jeweilige Nut nicht. Die Kurbeln führen bei jedem Bewegungsschritt eine Drehung von 180° im Uhrzeiger- und gegen Uhrzeigersinn aus, durchlaufen also keinen vollen Kreis. Bekannt ist auch eine Schnittschaltvorrichtung (DE-A-25 37 999), bei der für einen definierten Vorschub eine Triebstockverzahnung mittels einer Scheibe mit zwei diametral gegenüberliegenden Stiften verwirklicht ist, die in eine Zahnstange eingreifen.

Der Erfindung liegt demgemäß die Aufgabe zugrunde, eine Maschine zum taktmäßigen und reziproken Bewegen von auch schweren Werkstücken u. dgl. anzugeben, die bei geringem Aufwand und geringem Energieeinsatz eine schonende und schnelle Bewegung in zwei oder mehreren Schritten ermöglicht.

Die Lösung der Aufgabe ist durch die Maschine, beschrieben im Patentanspruch 1 verwirklicht.

Die Kurbelzapfen können auf einfache Weise mittels eines Elektromotors aber auch mit beliebig anderen Antriebsaggregaten angetrieben werden. Bei Beginn jedes Schrittes, nämlich dann, wenn ein Kurbelzapfen in seine Nut eintritt, ist die Geschwindigkeit des Schlittens Null. Im weiteren Verlauf steigt die Geschwindigkeit bis zu einem Kurbelwinkel von 90° auf ein Maximum an und fällt dann wieder am Ende des Bewegungsschrittes auf Null ab. Insgesamt entspricht dies einem sinusförmigen Geschwindigkeitsverlauf.

Dem zweiten Bewegungsschritt können weitere Bewegungsschritte folgen, wenn zusätzliche Kurbelzapfen und/oder weitere Nuten des gemeinsamen Kulissenschiebers vorgesehen sind. Die Wegstrecken der einzelnen Bewegungsschritte können verhältnismäßig groß sein. Sie brauchen nicht gleiche Länge zu haben und müssen auch nicht geradlinig aneinander anschließen. Durch Wahl der Schlittenführung und Lage und Anordnung der Kurbelzapfen und/oder der Nuten können beliebige Wege erzielt werden.

Prinzipiell besteht in Verwirklichung der Erfindung zum ersten die Möglichkeit, daß die Kurbelzapfen je an einer eigenen Kurbel angeordnet sind und je eine eigene Antriebswelle besitzen und daß die Antriebswellen parallel zueinander verlaufen und so angeordnet sind, daß die Kurbelzapfen-Kreisbahnen in der gleichen Ebene und in Richtung der Bewegungsbahn des Schlittens hintereinanderliegen. Der Kulissenschieber wird dann bei den Bewegungsschritten von Kurbelzapfen zu Kurbelzapfen weitergegeben. Zum zweiten kann vorgesehen sein, daß die Kurbelzapfen an den beiden Enden einer gemeinsamen Kurbel angeordnet sind. Die beiden Kurbelzapfen sind dann also um 180° gegeneinander versetzt und besitzen eine gemeinsame Antriebswelle. Bei den einzelnen Bewegungsschritten greifen dann die Kurbelzapfen abwechselnd in die beiden Nuten bzw. bei weiteren Bewegungsschritten in weitere Nuten des gemeinsamen Kulissenschiebers ein. Die beiden Möglichkeiten können auch miteinander kombiniert werden.

Bei einer Verwirklichung der Erfindung entsprechend der erläuterten ersten Möglichkeit läßt sich die Synchronisation der Kurbeln, die für das richtige Ineinandergreifen der Bewegungsabläufe mit Ein- bzw. Austreten der Kurbeln aus den Nuten des Kulissenschiebers sorgt, auf unterschiedliche Weise erreichen, beispielsweise durch eine Kopplung mittels eines Zahnriemens oder einer Kette. In Weiterbildung der Erfindung können zu diesem Zweck auf den Wellen der Kurbeln drehfest gleich große, miteinander kämmende Zahnräder angeordnet sein. Die Kurbeln bewegen sich dann immer mit der richtigen Phasenlage zueinander. Eines der Zahnräder kann zur Verwirklichung des Antriebs über ein weiteres, vorzugsweise kleineres Zahnrad mit einem Getriebemotor verbunden sein.

Statt einer gegensinnigen Drehbewegung der Kurbelzapfen kann bei entsprechender Ausbildung der Nuten des Kulissenschiebers auch eine gleichsinnige Drehbewegung verwirklicht werden.

In weiterer Ausbildung für die erste Möglichkeit schlägt die Erfindung vor, daß der Schlitten zwei parallele, am oberen und unteren Ende über eine Traverse verbundene Stangen aufweist, die in je zwei an einem ortsfesten Gehäuse befestigten Führungen laufen, daß die Wellen oder kurbeln parallel zueinander im Gehäuse gelagert sind und daß der Antrieb der Wellen im Gehäuse angeordnet ist. Bei erhöhten Anforderungen an die Hebe- oder Verschiebekraft können die Wellen der Kurbeln auf beiden Seiten aus dem Gehäuse herausgeführt werden und dort mit ihren Kurbeln je einen Schlitten mit geführten Stangen und Traversen antreiben, wobei zusätzlich die beiden Schlitten zu einem gemeinsamen Schlitten verbunden sind. Durch diese Verdopplung des Antriebs erhält man neben erhöhter Kraft und Belastbarkeit eine symmetrische Führung an allen vier Seiten des Schlittens.

Zweckmäßig ist der Motor für die Antriebswelle oder Antriebswellen bzw. ein zwischengeschaltetes Getriebe mit einer Bremse versehen, so daß die Lage des Schlittens an jeder beliebigen Stelle fixiert werden kann. In den Totpunkten, also jeweils am Ende bzw. zu Beginn eines Bewegungsschrittes ist eine automatische Lagesicherung verwirklicht, weil der Schlitted dann von den Kurbelzapfen gehalten ist.

In Weiterbildung der Erfindung ist für beide Verwirklichungsmöglichkeiten vorgesehen, daß die Kurbelarmlänge einstellbar ist. Dann können die bei jedem Schritt erzielten Wegstrecken an die jeweiligen Verhältnisse angepaßt werden.

Um eine Grundeinstellung zu ermöglichen, also den Weganfang oder das Wegende in Anpassung an die Verhältnisse ändern zu können, wird mit Vorteil der Kulissenschieber verschiebbar am Schlitten befestigt, beispielsweise mit Schrauben, die durch Langlöcher greifen, oder mit Hilfe von Klemmschrauben.

Nachfolgend werden zwei Ausführungsbeispiele der Erfindung anhand der Zeichnungen beschrieben. Es zeigen:

Fig. 1 eine teilweise geschnittene Seitenansicht eines ersten Ausführungsbeispiels;

Fig. 2 eine um 90° gedrehte Vorderansicht der Maschine nach Fig. 2;

Fig. 3 eine teilweise geschnittene Seitenansicht eines zweiten Ausführungsbeispiels;

Fig. 4 eine um 90° gedrehte Vorderansicht der Maschine nach Fig. 3;

Fig. 5 ein schematisches Schaubild für die Bewegungsschritte der Maschine gemäß Fig. 3 und 4.

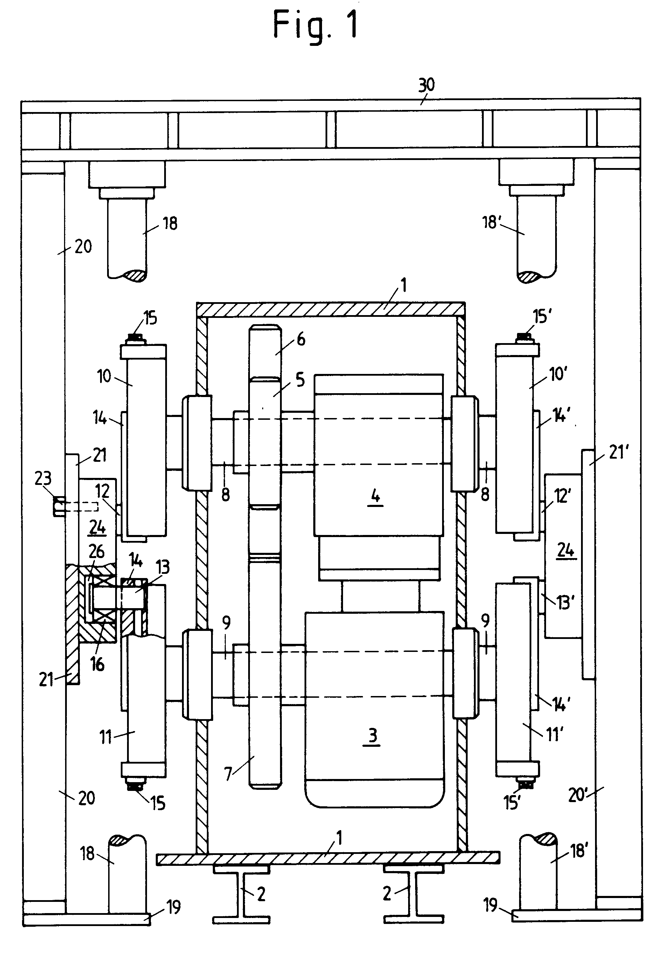

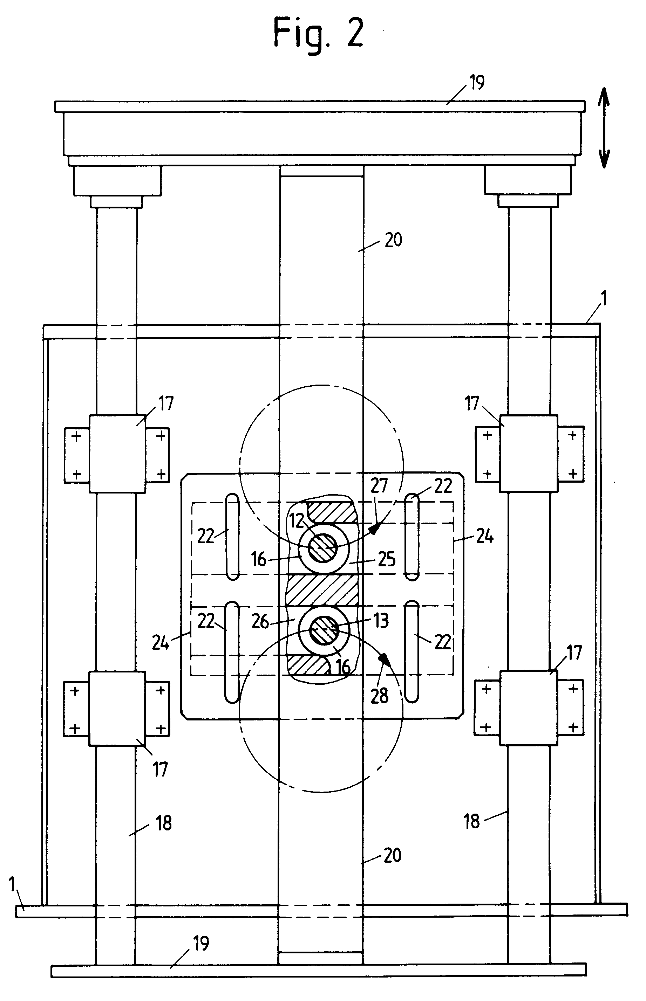

Das erste Ausführungsbeispiel, das die oben erläuterte erste Ausführungsmöglichkeit verwirklicht, wird nachfolgend unter gleichzeitiger Bezugnahme auf Fig. 1 und 2 beschrieben. Zur Vereinfachung der Darstellung sind in Fig. 2 Teile des Antriebs weggelassen worden, wie noch im einzelnen erläutert wird.

Ein aufgeschnitten dargestelltes Gehäuse 1 ist auf Schienen 2 ortsfest gelagert. Je nach den Verhältnissen kann auch eine beliebige andere Anordnung gewählt sein. Das Gehäuse enthält einen Elektromotor 3, der über ein nur schematisch dargestelltes Getriebe 4 und ein kleines Zahnrad 5 ein größeres Zahnrad 6 antreibt, das wiederum mit einem Zahnrad 7 gleicher Größe kämmt. Die beiden Zahnräder 6, 7 sitzen drehfest auf Wellen 8 bzw. 9, die in den Seitenwänden des Gehäuses 1 gelagert sind. An beiden Enden tragen die Wellen 8, 9 Kurbeln 10 bzw. 11 und auf der gegenüberliegenden Seite 10' bzw. 11'. Alle bisher beschriebenen Teile 1 bis 11 sind in Fig. 2 zur Vereinfachung weggelassen.

An den Kurbeln sind Kurbelzapfen 12 bzw. 13 und 12' bzw. 13' angeordnet, die in ihrem radialen Abstand von der Achse der Wellen mittels eines Schiebers 14 bzw. 14' eingestellt werden. Der Schieber kann mit Hilfe nur schematisch gezeigten Schrauben 15 bzw. 15' verstellt werden. Am freien Ende sind die Kurbelzapfen 12, 13 und 12', 13' mit kugelgelagerten Röllchen 16 ausgestattet.

Am Gehäuse 1 sind in Führungen 17 Stangen 18 gelagert und längsverschieblich geführt. Am oberen und unteren Ende verbinden Traversen 19 die beiden Stangen 18. In der Mitte zwischen den Stangen 18 ist zwischen den Traversen 19 ein Rohr 20 mit Rechteckquerschitt angeordnet. Das Rohr 20 trägt etwa in der Mitte eine fest angeschweißte Platte 21 mit Langlöchern 22. Durch diese Langlöcher 22 führen Schrauben 23, von denen nur eine in Fig. 1 gezeigt ist. Mit Hilfe dieser Schrauben 23 kann ein Kulissenschieber 24 in seiner Höhenlage einstellbar an der Platte 21 befestigt werden.

Der Kulissenschieber besitzt zwei parallele und in der Darstellung horizontal verlaufende Nuten 25 bzw. 26, in die die Kurbelzapfen 12 bzw. 13 mit ihren Röllchen 16 einlaufen können. In Fig. 2 ist zur Verdeutlichung ein Teil des Rohres 20 weggebrochen dargestellt.

In der in den Figuren 1 und 2 dargestellten Lage befindet sich der Schlitten 18 bis 20 in der mittleren Lage zwischen den beiden möglichen Hebe- bzw. Absenkschritten. Werden jetzt die beiden Zahnräder 6, 7 und damit die Kurbeln 10, 11 sowie 10', 11' (die folgende Erläuterung gilt sinngemäß auch für die Bauteile mit gestrichenen Bezugsziffern) in Richtung der Pfeile 27 bzw. 28 angetrieben, so läuft der Kurbelzapfen 13 mit seinem Röllchen 16 aus der nut 26 heraus. Gleichzeitig läuft der Kurbelzapfen 12 mit Röllchen 16 weiter in seine Nut 25 hinein, wobei der Kulissenschieber 24 und damit der gesamte Schlitten 18 bis 20 angehoben wird. Ausgehend von der Geschwindigkeit Null beschleunigt dabei der Schlitten und erreicht bei einer Winkelstellung des Kurbelzapfens 12 von 90° seine maximale Geschwindigkeit. Bis zum Oberen Totpunkt nimmt die Geschwindigkeit dann wieder auf Null ab und folgt insgesamt einem sinusförmigen Verlauf. Wenn dann die Kurbeln wieder in der entgegengesetzten Richtung gedreht werden, wird der Schlitten 18 bis 20 wieder in die gezeigte Lage zurückgeführt. Beim Weiterdrehen in der gleichen Richtung, also entgegengesetzt zu den Pfeilen 27 und 28, läuft der Kurbelzapfen 12 mit Röllchen 16 aus seiner Nut 25 heraus und gleichzeitig führt der Kurbelzapfen 13 mit Röllchen 16 den Kulissenschieber 24 in einem weiteren Bewegungsschritt zur unteren Totpunktlage. Auch hier folgt die Bewegungsgeschwindigkeit wiederum einer Sinusfunktion.

Die Hubhöhe bei den beiden Schritten läßt sich mittels der Schieber 14 und Schrauben 15 einstellen. Dabei muß jeweils eine gleichsinnige Verstellung erfolgen, damit die beiden Kurbelzapfen 12, 13 den in Fig. 2 zu erkennenden Abstand entsprechend dem Abstand der beiden Nuten 25, 26 behalten.

Wie bereits erläutert, ist der Antrieb auf beiden Seiten des Gehäuses 1 verdoppelt und die beiden zugehörigen Schlitten sind auf der Oberseite über eine weitere Traverse 30 verbunden, so daß insgesamt ein an allen vier Ecken über Säulen 18 geführtes Hebepodest entsteht.

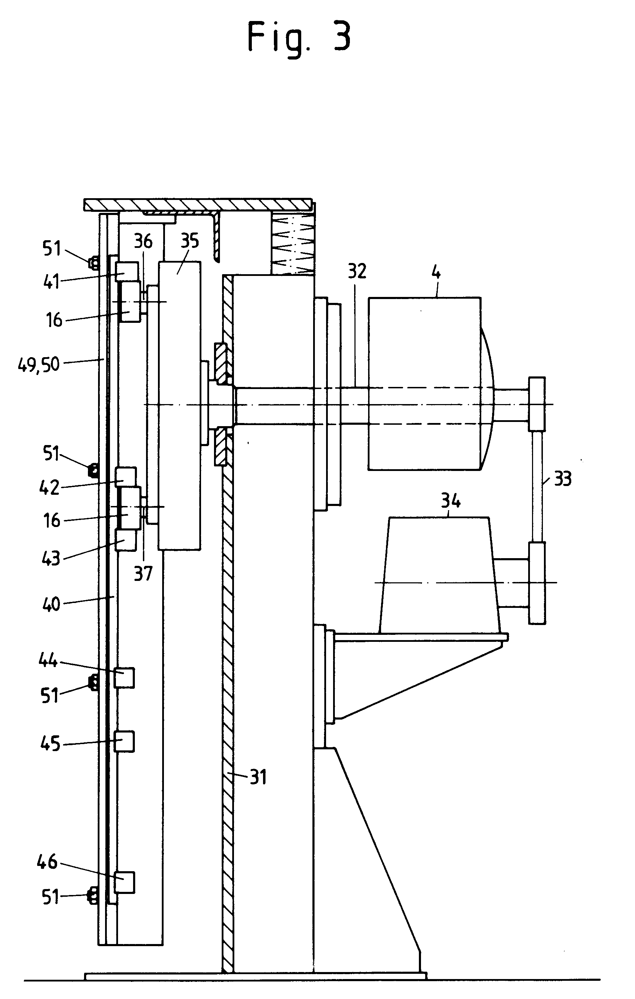

Das zweite Ausführungsbeispiel, das die oben erläuterte zweite Verwirklichungsmöglichkeit darstellt, wird nachfolgend anhand der Figuren 3 bis 5 beschrieben. Soweit gleiche oder ähnliche Bauteile wie bei dem ersten Ausführungsbeispiel vorhanden ist, werden gleiche Bezugsziffern benutzt.

Die dargestellte Maschine ist mit einem steifen Profiliträger 31 ortsfest gelagert. Am Profilträger 31 ist ein nur schematisch dargestellter Getriebemotor 4 angeflanscht, dessen Welle 32 auf einer Seite über einen Zahnriementrieb 33 ein ebenfalls nur schematisch gezeigtes Nockenschaltwerk 34 zur Steuerung der einzelnen Bewegungsschritte antreibt. Auf der anderen Seite trägt die Motorwelle 32 an einem gemeinsamen Kurbelarm 35 zwei um 180° versetzte Kurbelzapfen 36, 37 mit kugelgelagerten Röllchen 16.

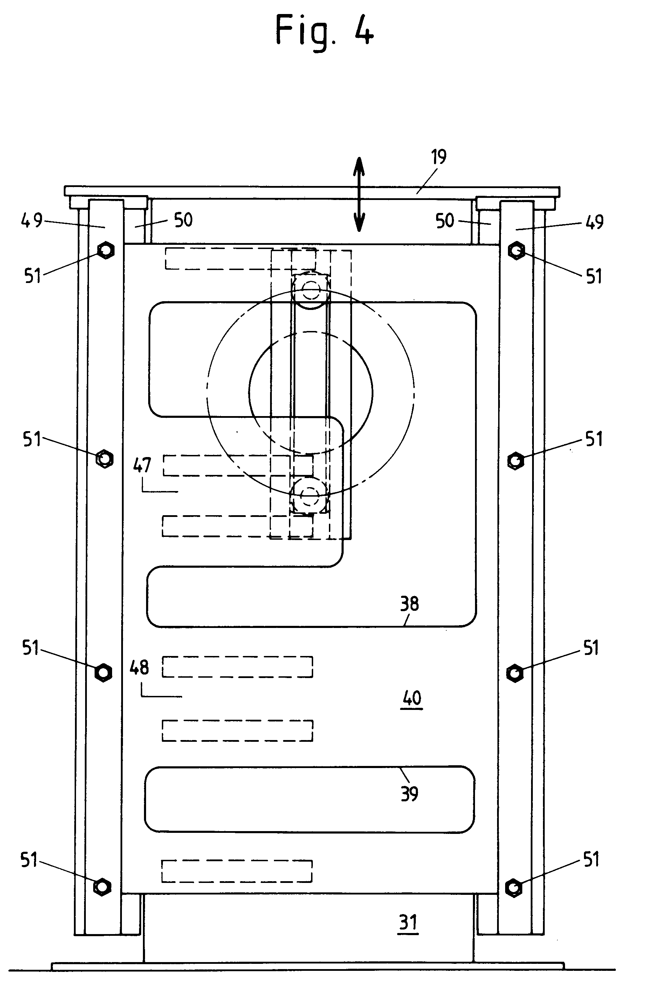

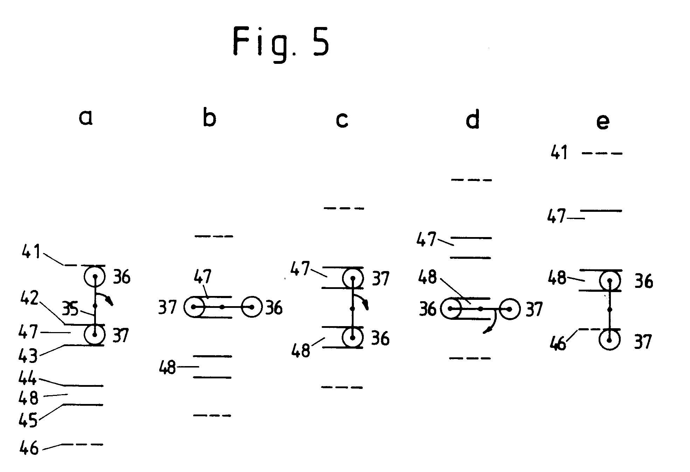

Eine mit großflächigen Öffnungen 38, 39 (Fig. 4) versehene Platte 40, die dem Kulissenschieber 24 des ersten Ausführungsbeispiel nach Fig. 1 und 2 entspricht, trägt parallele Leisten 41 bis 46. Die Leisten 42, 43 bzw. 44, 45 definierten zwischen sich die Nuten 47 bzw. 48 für das Einlaufen der Röllchen 16. Die beiden weiteren Leisten 21 und 46 stellen Sicherungen dar, die in Verbindung mit Fig. 5 noch erläutert werden sollen. Die Platte 40 kann auf beiden Seiten mit Hilfe von Holmen 49 und Schrauben 51 an zwei Profilsäulen 50 mit Rechteckquerschnitt durch Anpressen festgelegt werden. Die beiden Profilsäulen 50 sind mittels einer Traverse 19 verbunden, die das Hebepodest darstellt oder trägt. Nach Lösen der Schrauben 51 ist eine Verschiebung der Platte 40 gegen die Holme 49 und die Profilsäulen 50 zur Einstellung der Anfangs- und Endlage möglich.

Dir für die Führung des aus den Teilen 40, 49, 50, 19 gebildeten Schlittens erforderlichen Bauteile sind zur Vereinfachung in den Figuren 3 und 4 weggelassen worden. Eine Führung könnte beispielsweise ähnlich wie bei dem ersten Ausführungsbeispiel gemäß Fig. 1 und 2 verwirklicht werden.

In der in den Figuren 3 und 4 dargestellten Lage befindet sich der Schlitten 19, 40, 49, 50 in seiner untersten Position. Dies entspricht der Darstellung in Fig. 5a. In dieser Figur sind die einzelnen Bewegungsvorgänge schematisch anhand der Leisten 41 bis 46 mit den Nuten 47 und 48, der Kurbel 35 und der beiden Kurbelzapfen 36, 37 dargestellt. Dreht man den Kurbelarm 35 in Richtung der Pfeile in Fig. 5 so ergibt sich nach einer Drehung um 90° die Lage gemäß Fig. 5b. Der Schlitten hat dann einen halben Bewegungsschritt nach oben ausgeführt. Nach einer weiteren Drehung um 90° ist gemäß Fig. 5c der erste Bewegungsschritt vollendet. Ein Weiterdrehen des Kurbelarms 35 ergibt nach 90° die Lage gemäß Fig. 5d und nach 180° die Endlage gemäß Fig. 5e. Der Schlitten hat dann insgesamt zwei Bewegungsschritte nach oben durchgeführt. Absenkschritte werden durch Drehen des Kurbelarms 35 in Gegenrichtung der Pfeile gemäß Fig. 5 erzielt. Nach einer Drehung von insgesamt 360° erreicht man wieder die untere Endlage gemäß Fig. 5a.

Wenn man beim Absenken des Schlittens den Kurbelarm 35 etwas über die Lage gemäß Fig 5a gegen die Richtung des dargestellten Pfeils weiterdrehen würde, so verläßt der Kurbelzapfen 37 mit seinem Röllchen 16 die Nut 47. Der Schlitten wäre dann nicht mehr geführt, wenn nicht die zusätzliche Leiste 41 vorhanden wäre. Entsprechendes gilt für die obere Endlage gemäß Fig. 5e. Hier sichert die zusätzliche Leiste 46 den Schlitten, wenn der Kurbelarm 35 über die Endlage in Pfeilrichtung weitergedreht wird und dabei der Kurbelzapfen 36 aus der Nut 48 austritt.

Auch bei dem Ausführungsbeispiel gemäß Fig. 3 bis 5 könnte eine doppelseitige Konstruktion wie bei dem Ausführungsbeispiel nach Fig. 1 und 2 zur Verwirklichung eines an allen vier Ecken geführten Hebepodestes verwirklicht werden.

**Patentansprüche**

1. Maschine zum taktmäßigen und reziproken Bewegen von Werkstücken u. dgl. mit einem entlang seiner Bewegungsbahn geführten Schlitten für die Bewegung der Werkstücke und mit einem Antrieb für den Schlitten, der wenigstens zwei synchron angetriebene Kurbelzapfen (12, 13; 36, 37) aufweist, die in einer Nut (25, 26; 47, 48) eines am Schlitten (18 bis 20; 40, 49, 550) befestigten, gemeinsamen Kulissenschiebers (24, 40) gefangen sind, dadurch gekennzeichnet, daß die Kurbelzapfen (12, 13; 36, 37) je nur auf etwa ihrer halben Bewegungsbahn in einer zugeordneten Nut (25, 26; 47, 48) des Kulissenschiebers (24, 40) gefangen sind und daß wenigstens zwei Nuten (25, 26; 47, 48) übereinander und parallel zueinander am Kulissenschieber (24, 40) angeordnet sind, derart, daß nach Ausführen eines Bewegungsschrittes, durch einen Kurbelzapfen (13, 37) dieser aus seiner Nut (26, 47) austritt und gleichzeitig der jeweils andere Kurbelzapfen (12, 36) in seine Nut (25, 48) eintritt und einen zweiten Bewegungsschritt ausführt.

2. Maschine nach Anspruch 1, dadurch gekennzeichnet, daß die Kurbelzapfen (12, 13) je an einer eigenen Kurbel (10, 11) angeordnet sind und je eine eigene Antriebswelle (8, 9) besitzen und daß die Antriebswellen (8, 9) parallel zueinander verlaufen und so angeordnet sind, daß die Kurbelzapfen-Kreisbahnen in der gleichen Ebene und in Richtung der Bewegungsbahn des Schlittens (18 bis 20) hintereinanderliegen (Fig. 1, 2).

3. Maschine nach Anspruch 2, dadurch gekennzeichnet, daß auf den Antriebswellen (8, 9) der Kurbeln (10, 11) drehfest gleich große, miteinander kämmende Zahnräder (6, 7) angeordnet sind.

4. Maschine nach Anspruch 3, dadurch gekennzeichnet, daß eines der Zahnräder (6) über ein weiteres Zahnrad (5) und einen Getriebemotor (3, 4) antreibbar ist.

5. Maschine nach einem der Ansprüche 1 bis 4, dadurch gekennzeichnet, daß der Schlitten zwei parallele, am oberen und unteren Ende über eine Traverse (19) verbundene Stangen (18) aufweist, die in je zwei an einem ortsfesten Gehäuse (1) befestigten Führungen (17) laufen, daß die Wellen (8, 9) der Kurbeln (10, 11) parallel zueinander im Gehäuse (1) gelagert sind und daß der Antrieb (3, 4, 5, 6, 7) der Wellen (8, 9) im Gehäuse (1) angeordnet ist.

6. Maschine nach Anspruch 5, dadurch gekennzeichnet, daß die Wellen (8, 9) der Kurbeln (10, 11) auf beiden Seiten aus dem Gehäuse (1) herausgeführt sind und dort mit ihren Kurbeln (10, 11; 10', 11') je einen Schlitten (18 bis 20) antreiben und daß die beiden Schlitten zu einem gemeinsamen Schlitten verbunden (30) sind.

7. Maschine nach Anspruch 1, dadurch gekennzeichnet, daß die Kurbelzapfen (36, 37) an den beiden Enden einer gemeinsamen Kurbel (35) angeordnet sind (Fig. 3, 4).

8. Maschine nach einem der Ansprüche 1 bis 7, dadurch gekennzeichnet, daß die Nuten (25, 26; 47, 48) parallel zueinander und senkrecht zur Bewegungsbahn des Schlittens (18 bis 20; 40, 49, 50) verlaufen.

9. Maschine nach einem der Ansprüche 1 bis 8, dadurch gekennzeichnet, daß die Kurbelarmlänge einstellbar (14, 15) ist.

10. Maschine nach einem der Ansprüche 1 bis 9, dadurch gekennzeichnet, daß der Kulissenschieber (24, 40) verschiebbar am Schlitten befestigt ist.

## Claims

1. A machine for the timed and reciprocating movement of workpieces or the like, the machine comprising: a slide guided along its movement path to move the workpieces; and a drive for the slide, the drive having at least two synchronously driven crank pins (12, 13; 36, 37) captive in a groove (25, 26; 47, 48) in a common slotted slider (24, 4Ø) secured to the slide (18 - 2Ø; 4Ø, 49, 55Ø), characterised in that the crank pins (12, 13; 36, 37) are each captive only over about half their movement path in an associated groove (25, 26; 47, 48) in the slotted slider (24, 4Ø), and at least two grooves (25, 26; 47, 48) are so disposed one above another and parallel to one another on the slotted slider (24, 4Ø) that after one crank pin (13, 37) has made a movement step it issues from its groove (26, 47) and the other crank pin (12, 36) simultaneously enters its groove (25, 48) and performs a second movement step.

2. A machine according to claim 1, characterised in that the crank pins (12, 13) are each disposed on their own crank (1Ø, 11) and each has its own drive shaft (8, 9), and the drive shafts (8, 9) extend parallel to one another and are so disposed that the crank pin orbits are disposed in coplanar relationship to one another and consecutively in the direction of the movement path of the slide (18 - 2Ø) (Figs. 1, 2).

**3.** A machine according to claim 2, characterised in that meshing gears (6, 7) of identical size to one another are so disposed on the crank drive shafts (8, 9) as to corotate therewith.

**4.** A machine according to claim 3, characterised in that one (16)of the gears is drivable by way of another gear (5) and a geared motor (3, 4).

**5.** A machine according to any of claims 1 to 4, characterised in that the slide has two parallel bars (18) which are interconnected at top and bottom by cross-members (19) and which each move in two guides (17) secured to a stationary casing (1), the crank shafts (8, 9) are mounted parallel to one another in the casing (1) and the drive (3 - 7) of the shafts (8, 9) is disposed in the casing (1).

**6.** A machine according to claim 5, characterised in that the crank shafts (8, 9) extend out of the casing (1) on both sides where by way of their cranks (1Ø, 11; 1Ø' , 11') they each drive a slide (18 - 2Ø), and the two slides are combined (3Ø) to form a common slide.

**7.** A machine according to claim 1, characterised in that the crank pins (36, 37) are disposed at the two ends of a common crank (35) (Figs. 3, 4).

**8.** A machine according to any of claims 1 to 7, characterised in that the grooves (25, 26; 47, 48) extend parallel to one another and perpendicularly to the movement path of the slide (18 - 2Ø; 4Ø, 49, 5Ø).

**9.** A machine according to any of claims 1 to 8, characterised in that the crank arm length is adjustable (14, 15).

**10.** A machine according to any of claims 1 to 9, characterised in that the slotted link (24, 4Ø) is so secured to the slide as to be displaceable.

**Revendications**

**1.** Machine servant à mouvoir de manière cyclique et réciproque des pièces à usiner ou analogues, comportant un chariot guidé le long de sa voie de travail, destiné au mouvement des pièces à usiner et son entraînement, qui présente au moins deux manetons de manivelle (12, 13; 36, 37) actionnés de manière synchrone, lesquels sont captifs dans une rainure (25, 26 ; 47, 48) d'un coulisseau (24, 40) commun, fixé au chariot (18 à 20 ; 40, 49, 50), caractérisée en ce que

les manetons de manivelle (12, 13 ; 36, 37) ne sont respectivement captifs dans la rainure associée (25, 26 ; 47, 48) du coulisseau (24, 40) que sur environ la moitié de leur voie de travail et

en ce que, sur le coulisseau (24, 40), deux rainures (25, 26 ; 47, 48) sont placées l'une au dessus de l'autre parallèles entre elles, de telle sorte

qu'un maneton de manivelle (13, 37) sorte de sa rainure (26, 47) après exécution de son pas de travail, tandis que simultanément l'autre maneton de manivelle (12, 36) pénètre dans sa rainure (25, 48) et effectue un deuxième pas de travail.

**2.** Machine selon la revendication 1, caractérisée en ce que les manetons de manivelle (12, 13) sont placés chacun sur une manivelle propre (10, 11) et possèdent chacun un arbre d'entraînement propre (8, 9) et en ce que les arbres d'entraînement (8, 9) sont parallèles entre eux et sont situés de telle sorte que les manetons de manivelle à trajectoire circulaire sont placés l'un derrière l'autre (figures 1, 2) dans le même plan et dans le sens de la trajectoire de travail du chariot (18 à 20).

**3.** Machine selon la revendication 2, caractérisée en ce que des roues dentées (6, 7) de même taille, en prise mutuelle, sont placées solidaires en rotation sur les arbres d'entraînement (8, 9) des manivelles (10, 11).

**4.** Machine selon la revendication 3, caractérisée en ce que l'une des roues dentées (6) peut être entraînée par l'intermédiaire d'une autre roue dentée (5) et d'un moto-réducteur (3, 4).

**5.** Machine selon l'une des revendications 1 à 4, caractérisée en ce que le chariot présente deux barres parallèles (18) reliées à leurs extrémités supérieure et inférieure par une traverse (19), lesquelles courent chacune dans deux guides (17) fixés sur un châssis fixe (1), en ce que les arbres (8, 9) des manivelles (10, 11) sont logés parallèlement entre eux dans le châssis (1) et en ce que l'entraînement (3, 4, 5, 6, 7) des arbres (8, 9) est placé dans le châssis (1).

**6.** Machine selon la revendication 5, caractérisée en ce que les arbres (8, 9) des manivelles (10, 11) dépassent du châssis (1) des deux côtés et actionnent là avec leurs manivelles (10, 11, 10', 11') un chariot respectif (18 à 20) et en ce que les deux chariots sont réunis en un chariot commun (30).

7. Machine selon la revendication 1, caractérisée en ce que les manetons de manivelle (36, 37) sont placés (figures 3, 4) aux deux extrémités d'un maneton commun (35).

8. Machine selon l'une des revendications 1 à 7, caractérisé en ce que les rainures (25, 26 ; 47, 48) parallèles entre elles sont perpendiculaires à la voie de travail du chariot (18 à 20 ; 40, 49, 50).

9. Machine selon l'une des revendications 1 à 8, caractérisée en ce que la longueur du bras de manivelle (14, 15) est réglable.

10. Machine selon l'une des revendications 1 à 9, caractérisée en ce que le coulisseau (24, 40) est fixé mobile sur le chariot.

# Fig. 1

# Fig. 2

# Fig. 3

# Fig. 4

# Fig. 5